# EUROPÄISCHE PATENTSCHRIFT

(11) **EP 3 166 173 B1**
(45) Veröffentlichungstag und Bekanntmachung des Hinweises auf die Patenterteilung: **09.01.2019**
(21) Anmeldenummer: 15193303.3
(22) Anmeldetag: 05.11.2015
(51) Int. Cl.: H01M 10/42, B60L 11/18, H01M 10/44, H01M 10/48

(54) **BATTERIESYSTEM FÜR EIN FAHRZEUG**
BATTERY SYSTEM FOR A VEHICLE
SYSTEME DE BATTERIE POUR UN VEHICULE

(43) Veröffentlichungstag der Anmeldung: 10.05.2017
(73) Patentinhaber: Lithium Energy and Power GmbH & Co. KG, 70469 Stuttgart (DE)
(72) Erfinder: Friedrich, Marco, 71638 Ludwigsburg (DE)
(74) Vertreter: Isarpatent

(56) Entgegenhaltungen:
- EP-A2- 0 926 796
- EP-A2- 2 482 367
- DE-A1-102013 204 534
- US-A1- 2012 259 567
- Shriram Santhanagopalan ET AL: "Chapter 5 - Separators for Lithium-Ion Batteries", Lithium-Ion Batteries: Advanced Materials and Technologies, 1. Januar 2011 (2011-01-01), Seiten 197-251, XP055195568, ISBN: 978-1-43-984129-7 Gefunden im Internet: URL:http://www.crcnetbase.com/doi/pdf/10.1 201/b11292-6 [gefunden am 2015-06-12]

## Beschreibung

Die vorliegende Erfindung betrifft ein Batteriesystem für ein Fahrzeug. Das Batteriesystem umfasst eine Batterie mit mehreren Batteriezellen und eine Steuereinheit. Eine erste der Batteriezellen umfasst einen elektrochemischen Teil mit mehreren Elektroden und wenigstens einem Separator. Der wenigstens eine Separator wird beim Erreichen einer ersten Temperatur für in dem elektrochemischen Teil erzeugbare Ionen zumindest teilweise undurchlässig. Die Erfindung betrifft ferner ein Verfahren zum Überführen der ersten Batteriezelle in einen sicheren Zustand.

### Stand der Technik

Aus dem Stand der Technik ist bekannt, dass bei in Form von primären oder sekundären elektrochemischen Energiespeichern ausgebildeten Batteriezellen, wie zum Beispiel Lithium-Ionen-Batteriezellen, ein inhärentes Gefährdungspotential vorhanden ist. Ein solcher elektrochemischer Energiespeicher ist beispielsweise aus jedem der Dokumente EP 1 856 749 B1, DE 10 2008 050 872 A1, DE 10 2012 023 294 A1, DE 10 2013 200 848 A1 und DE 10 2013 203 485 A1 bekannt und weist einen elektrochemischen Teil auf, der mehrere Elektroden und wenigstens einen Separator umfasst. Der Separator des aus dem Dokument EP 1 856 749 B1 bekannten elektrochemischen Energiespeichers umfasst zwei Schichten, die beim Erreichen von unterschiedlichen Temperaturen jeweils für in dem elektrochemischen Teil dieses elektrochemischen Energiespeichers erzeugbare Ionen undurchlässig werden.

Dokument EP 0 926 796 A2 beschreibt eine Schutzvorrichtung für eine Batterie mit zwei Elektroden. Die Schutzvorrichtung umfasst Erfassungsmittel zum Erfassen wenigstens einer Anomalie der Batterie und Kurzschlussmittel zum Kurzschließen der zwei Elektroden beim Vorliegen einer Anomalie der Batterie. Die Schutzvorrichtung umfasst ferner eine Steuereinheit zum Steuern eines Kurzschluss-Widerstandes oder eines Kurzschluss-Entladestromes zwischen den zwei Elektroden. Dabei ist es notwendig, einen Widerstandswert des Kurzschluss-Widerstandes derartig auszuwählen, dass der Kurzschluss-Entladestrom nicht zu einer Erhöhung einer verursachten Wärmemenge über einen kritischen Grenzwert führt. Anderenfalls ist es notwendig, den Kurzschluss-Entladestrom so zu steuern, dass die Kurzschlussmittel nicht infolge des Kurzschluss-Entladestromes schmelzen.

Konkrete durch die zuvor genannten Batteriezellen verursachte Gefährdungen können beispielsweise infolge von Fehlerzuständen der Batteriezellen auftreten. Ein solcher Fehlerzustand einer Batteriezelle kann infolge eines durch einen Kurzschluss verursachten und einen sehr hohen Stromwert aufweisenden Entladestroms der Batteriezelle auftreten. Hierbei wird unter einem Stromwert eines Stromes ein Betrag dieses Stromes verstanden. Ein zuvor beschriebener Fehlerzustand einer Batteriezelle kann ferner infolge eines durch in einem Inneren der Batteriezelle stattfindende chemische Prozesse verursachten thermischen Durchgehens der Batteriezelle auftreten. Bei einer Lithium-Ionen-Batteriezelle können solche chemischen Prozesse sehr stark exotherme chemische Reaktionen sein. Unter einem thermischen Durchgehen einer Batteriezelle wird eine sehr starke Überhitzung dieser Batteriezelle verstanden, infolge derer eine durch Brand und/oder Explosion verursachte Zerstörung dieser Batteriezelle auftritt.

Aus dem Stand der Technik ist ferner bekannt, mehrere zuvor beschriebene Batteriezellen zu einer Batterie zusammenzufassen und Batteriesysteme mit solchen Batterien in Hybrid- und Elektrofahrzeuge einzusetzen. Solche Batterien müssen oft eine hohe elektrische Leistung bereitstellen und eine große Menge von elektrischer Energie speichern können. Dadurch haben diese Batterien ein hohes Gefährdungspotential. Gleichzeitig bestehen jedoch hohe Anforderungen an einer Betriebssicherheit eines Batteriesystems mit einer solchen Batterie, die beim Herstellen des Batteriesystems berücksichtigt werden müssen.

Potentiell gefährliche Situationen können insbesondere dann auftreten, wenn ein mit einem zuvor beschriebenen Batteriesystem betriebenes Fahrzeug einen Unfall erleidet oder infolge einer Naturkatastrophe, wie zum Beispiel infolge einer Überflutung des Fahrzeugs, beschädigt oder in sonstiger Weise in einen Fehlerzustand gebracht wird. Dabei kann es zu einer Beschädigung von in dem Fahrzeug vorhandenen spannungsführenden Teilen oder einer isolierenden Umhüllung solcher Teile oder einer Batterie des im Fahrzeug vorhandenen Batteriesystems kommen. Solche Beschädigungen können sowohl zu Gefährdungen von Fahrzeuginsassen oder anderer sich in einem Umfeld des Fahrzeuges befindlicher Personen als auch zu Gefährdungen von sich im Umfeld des Fahrzeugs befindlichen Sachen führen. Diese Gefährdungen können beispielsweise infolge von Fehlerströmen, die von der beschädigten Batterie verursacht werden, auftreten. Hierbei zu berücksichtigen ist, dass solche Fehlerströme beispielsweise eine Gefährdung durch Berührstrom und Lichtbogen und bei Vorliegen von Kurzschlüssen auch eine Gefährdung durch Hitze verursachen können. Solche Gefährdungen können ferner auch infolge einer in den Batteriezellen der beschädigten Batterie elektrochemisch gespeicherten Energie auftreten. Hierbei zu berücksichtigen ist, dass diese so gespeicherte Energie eine Gefährdung durch Entzündung oder Explosion der Batteriezellen der beschädigten Batterie verursachen kann.

Die zuvor beschriebenen Gefährdungen können auch infolge einer missbräuchlichen Nutzung oder eines unsachgemäßen Öffnens oder von Manipulationen eines zuvor beschriebenen Batteriesystems auftreten. Eine solche missbräuchliche Nutzung kann eine missbräuchliche Verwendung eines solchen Batteriesystems außerhalb seines zulässigen Verwendungsbereichs sein, die zu Werten von Betriebsparametern des Batteriesystems führt, die jeweils außerhalb eines zulässigen Wertebereichs liegen.

### Offenbarung der Erfindung

Erfindungsgemäß wird ein Batteriesystem für ein Fahrzeug mit einer mehrere Batteriezellen aufweisenden Batterie und einer Steuereinheit bereitgestellt. Dabei umfasst eine erste der Batteriezellen einen elektrochemischen Teil mit mehreren Elektroden und wenigstens einem Separator. Dabei wird der wenigstens eine Separator beim Erreichen einer ersten Temperatur für in dem elektrochemischen Teil erzeugbare Ionen zumindest teilweise undurchlässig. Weiterhin umfasst die erste Batteriezelle eine Schnellentladeeinheit. Dabei ist die Schnellentladeeinheit mittels der Steuereinheit zwischen zwei von innerhalb und/oder außerhalb der ersten Batteriezelle kontaktierbare Batteriezellterminals der ersten Batteriezelle elektrisch zuschaltbar. Ferner ist die Schnellentladeeinheit dazu ausgebildet, die erste Batteriezelle mittels eines ersten Stroms zu entladen. Dabei ist ein erster elektrischer Widerstandswert der Schnellentladeeinheit derartig ausgewählt, dass der erste Strom während eines Durchfließens der Schnellentladeeinheit und der ersten Batteriezelle eine derartige Erwärmung des elektrochemischen Teils verursacht, dass der wenigstens eine Separator die erste Temperatur erreicht. Die Unteransprüche zeigen bevorzugte Weiterbildungen der Erfindung.

Bei dem zuvor beschriebenen Batteriesystem wird bei geeigneter Wahl des ersten Widerstandswerts ein Stromwert des ersten Stroms so groß, dass der erste Strom zu einer starken Erwärmung des gesamten elektrochemischen Teils der ersten Batteriezelle führt. Diese starke Erwärmung führt ferner dazu, dass der wenigstes eine Separator die erste Temperatur erreicht und dadurch für die in dem elektrochemischen Teil erzeugbare Ionen zumindest teilweise undurchlässig wird. Das bedeutet, dass der wenigstens eine Separator beim Erreichen der ersten Temperatur nur noch einen kleinen Teil dieser Ionen oder gar keine Ionen mehr durchlassen kann. Folglich kann innerhalb des elektrochemischen Teils kein Ladungsträgertransport mehr oder nur noch ein sehr geringer Ladungsträgertransport stattfinden. Unter Ladungsträgern werden hier die genannten Ionen verstanden.

In einem Fall, in dem der wenigstens eine Separator für die zuvor genannten Ionen teilweise undurchlässig wird, wird eine Teilfläche einer Gesamtfläche des wenigstens einen Separators für die zuvor genannten Ionen undurchlässig. In diesem Fall werden der Separator und folglich auch die erste Batteriezelle elektrisch teilweise deaktiviert. Dadurch erfolgt eine starke Begrenzung eines maximalen Stromwerts des ersten Stroms, so dass die erste Batteriezelle keine Gefährdungen mehr oder nur noch sehr geringe Gefährdungen verursachen kann.

In einem Fall, in dem der wenigstens eine Separator für die zuvor genannten Ionen vollständig undurchlässig wird, wird die Gesamtfläche des wenigstens einen Separators für die zuvor genannten Ionen undurchlässig. In diesem Fall werden der wenigstens eine Separator und folglich auch die erste Batteriezelle elektrisch vollständig deaktiviert. Nach einer vollständigen Deaktivierung des wenigstens einen Separators und folglich auch der ersten Batteriezelle weisen der erste Strom einen Stromwert nahe 0 A und eine zwischen den zwei Batteriezellterminals der ersten Batteriezelle anliegende Spannung einen Spannungswert nahe 0 V auf. Dadurch kann die erste Batteriezelle über ihre zwei Batteriezellterminals keinen elektrischen Strom an einen sich außerhalb der ersten Batteriezelle befindlichen elektrischen Stromkreis mehr liefern. Dies geschieht, obwohl eine zu einem Beginn der Deaktivierung des wenigstens einen Separators in dem elektrochemischen Teil der ersten Batteriezelle elektrochemisch gespeicherte Energie immer noch in dem elektrochemischen Teil vorhanden ist. Ebenso kann auch ein Kurzschluss in einem Inneren der ersten Batteriezelle, der beispielsweise zwischen den Elektroden der ersten Batteriezelle vorkommt, nicht mehr zu einem potentiell gefährlichen Entladestrom in dem Inneren der ersten Batteriezelle führen. Folglich verbleibt die zum Beginn der elektrischen Deaktivierung des wenigstens einen Separators in dem elektrochemischen Teil der ersten Batteriezelle elektrochemisch gespeicherte Energie weiterhin in dem elektrochemischen Teil und kann nicht mehr über einen Entladestrom entnommen werden.

Nach einer wie zuvor beschriebenen Deaktivierung der ersten Batteriezelle kann keine Gefährdung mehr durch einen über einen sich außerhalb der ersten Batteriezelle befindlichen Stromkreis fließenden Strom auftreten. Hierbei zu berücksichtigen ist, dass ein solcher Strom zur Lichtbogenbildung oder bei Vorliegen eines Kurzschlusses auch zu einer Überhitzung von Stromleitern und/oder der ersten Batteriezelle führen kann. Ebenso kann nach einer wie zuvor beschriebenen Deaktivierung der ersten Batteriezelle keine Gefährdung mehr durch eine Beschädigung der Batteriezelle auftreten. Hierbei zu berücksichtigen ist, dass eine mechanische Beschädigung der ersten Batteriezelle insbesondere zu einer Entzündung der ersten Batteriezelle führen kann.

Bei einem zuvor beschriebenen Batteriesystem ist der elektrochemische Teil der ersten Batteriezelle bevorzugt in Form wenigstens einer Jelly-Roll oder eines Elektrodenstapels ausgebildet.

Bei einem zuvor beschriebenen Batteriesystem kann der erste Strom bevorzugt einen Stromwert aufweisen, der 10 bis 30 Mal größer als ein Stromwert ist, der von einem Entladestrom der ersten Batteriezelle während eines Normalbetriebs der ersten Batteriezelle angenommen wird.

Bei einem zuvor beschriebenen Batteriesystem erreicht der wenigstens eine Separator die erste Temperatur bevorzugt unmittelbar nach einem Ablaufen eines mit einem Zuschalten der Schnellentladeeinheit beginnenden ersten Zeitraums. Der erste Zeitraum weist bevorzugt eine Dauer von einigen Sekunden auf, insbesondere von 20 s.

Gemäß einer ersten bevorzugten Weiterbildung der Erfindung ist der erste Widerstandswert weiter derartig ausgewählt, dass die von dem ersten Strom während des Durchfließens der ersten Batteriezelle und der Schnellentladeeinheit verursachte Erwärmung des elektrochemischen Teils kein thermisches Durchgehen der ersten Batteriezelle auslöst. Ein thermisches Durchgehen der ersten Batteriezelle kann beispielsweise durch ein vollständiges Schmelzen oder durch ein Zurückziehen des wenigstens einen Separators und daher seiner vollständigen Unwirksamkeit ausgelöst werden.

Bei einem zuvor beschriebenen Batteriesystem können die Batteriezellen bevorzugt in einer Reihenschaltung angeordnet sein. In einem solchen Fall führt eine zuvor beschriebene Deaktivierung der ersten Batteriezelle zu einer Unterbrechung eines gesamten über die Batteriezellen verlaufenden Stromkreises. Wenn dieser Stromkreis unterbrochen ist, kann infolge der die Batteriezellen aufweisenden Batterie keine Berührungsspannung mehr auftreten, so dass eine von der Batterie verursachte Gefährdung durch Berührstrom nicht mehr auftreten kann.

Gemäß einer zweiten bevorzugten Weiterbildung der Erfindung ist die Steuereinheit dazu ausgebildet, bei einem Vorliegen eines Fehlerzustands der ersten Batteriezelle und/oder des Batteriesystems und/oder des Fahrzeugs die Schnellentladeeinheit zwischen die zwei Batteriezellterminals der ersten Batteriezelle zuzuschalten. Die zweite Weiterbildung kann mit der ersten Weiterbildung und/oder deren Ausgestaltungen kombiniert werden. Auf diese Weise wird erreicht, dass eine zuvor beschriebene Deaktivierung der ersten Batteriezelle nicht nur dann erfolgen kann, wenn ein Fehlerzustand der ersten Batteriezelle vorliegt, sondern auch dann, wenn ein Fehlerzustand des Batteriesystems und/oder des Fahrzeugs vorliegt.

Gemäß einer dritten bevorzugten Weiterbildung der Erfindung ist die Steuereinheit dazu ausgebildet, mit einer ersten und/oder zweiten Sensoreinheit des Batteriesystems und/oder mit einer Überwachungseinheit des Batteriesystems und/oder mit wenigstens einem Steuergerät des Batteriesystems zu kommunizieren. Dabei ist die erste Sensoreinheit dazu ausgebildet, wenigstens eine erste physikalische Größe bezüglich wenigstens eines Zustands der ersten Batteriezelle, insbesondere bezüglich eines Betriebs- und/oder Bewegungszustands der ersten Batteriezelle, zu erfassen. Alternativ oder zusätzlich ist die zweite Sensoreinheit dazu ausgebildet, wenigstens eine zweite physikalische Größe bezüglich wenigstens eines Zustands des Batteriesystems, insbesondere bezüglich eines Betriebs- und/oder Bewegungszustands des Batteriesystems, zu erfassen. Alternativ oder zusätzlich ist die Überwachungseinheit dazu ausgebildet, das Vorliegen des Fehlerzustands des Batteriesystems zu erkennen und beim Vorliegen des Fehlerzustands des Batteriesystems wenigstens ein Warnsignal oder Warninformationen zu erzeugen. Alternativ oder zusätzlich ist das wenigstens eine Steuergerät dazu ausgebildet, zum Steuern wenigstens einer Komponente des Batteriesystems jeweils Steuerinformationen und/oder Steuersignale zu erzeugen. Dabei ist das wenigstens eine Steuergerät dazu ausgebildet, die Steuerinformationen und/oder die Steuersignale insbesondere anhand einer Auswertung von Sensorsignalen der ersten und/oder der zweiten Sensoreinheit zu erzeugen. Dabei umfassen die Steuerinformationen bevorzugt Informationen, die mittels des wenigstens einen Steuergerätes bei wenigstens einer durch diesen durchgeführten Signalverarbeitung ermittelt werden. Die dritte bevorzugte Weiterbildung kann mit einer oder mehreren der zuvor beschriebenen bevorzugten Weiterbildungen und/oder deren Ausgestaltungen kombiniert werden.

Bei einem Batteriesystem gemäß der dritten bevorzugten Weiterbildung kann die Steuereinheit bevorzugt über eine direkte Verbindung oder über eine Kommunikationsschnittstelle, insbesondere über eine CAN-Schnittstelle, mit einer jeder der unmittelbar zuvor beschriebenen Komponenten des jeweiligen Batteriesystems kommunizieren.

Gemäß einer vierten bevorzugten Weiterbildung der Erfindung ist die Steuereinheit dazu ausgebildet, das Vorliegen des Fehlerzustands der ersten Batteriezelle anhand einer Auswertung von Sensorsignalen der ersten Sensoreinheit zu erkennen. Alternativ oder zusätzlich ist die Steuereinheit dazu ausgebildet, das Vorliegen des Fehlerzustands des Batteriesystems anhand einer Auswertung von Sensorsignalen der zweiten Sensoreinheit zu erkennen. Alternativ oder zusätzlich ist die Steuereinheit dazu ausgebildet, das Vorliegen des Fehlerzustands des Batteriesystems beim Vorliegen des wenigstens einen Warnsignals und/oder anhand einer Auswertung der Warninformationen zu erkennen. Alternativ oder zusätzlich ist die Steuereinheit dazu ausgebildet, das Vorliegen des Fehlerzustands des Batteriesystems anhand einer Auswertung wenigstens eines der Steuersignale und/oder wenigstens einer der Steuerinformationen zu erkennen. Die vierte bevorzugte Weiterbildung kann mit einer oder mehreren der zuvor beschriebenen bevorzugten Weiterbildungen und/oder deren Ausgestaltungen kombiniert werden.

Vorteilhaft bei einem Batteriesystem gemäß der vierten bevorzugten Weiterbildung ist, dass die Steuereinheit solche für andere Zwecke erzeugten und folglich in dem Batteriesystem schon vorhandenen Signale und Informationen nutzen kann, um den Fehlerzustand des Batteriesystems zu erkennen und folglich auch um eine zuvor beschriebene Deaktivierung der ersten Batteriezelle einzuleiten. Weiterhin vorteilhaft bei einem Batteriesystem gemäß der vierten bevorzugten Weiterbildung ist, dass die Steuereinheit eine zuvor beschriebene Deaktivierung der ersten Batteriezelle nicht nur während einer Nutzung des jeweiligen Batteriesystems in dem Fahrzeug einleiten kann. Vielmehr kann die Steuereinheit eine zuvor beschriebene Deaktivierung der ersten Batteriezelle auch während eines anderen Teils eines Lebenszyklus der ersten Batteriezelle oder des jeweiligen Batteriesystems einleiten, wie zum Beispiel während eines Transports oder einer Montage der ersten Batteriezelle oder des jeweiligen Batteriesystems.

Gemäß einer fünften bevorzugten Weiterbildung der Erfindung umfassen die erste und/oder die zweite Sensoreinheit jeweils einen Spannungssensor und/oder einen Stromsensor und/oder einen Beschleunigungssensor. Die fünfte bevorzugte Weiterbildung kann mit einer oder mehreren der zuvor beschriebenen bevorzugten Weiterbildungen und/oder deren Ausgestaltungen kombiniert werden.

Gemäß einer sechsten bevorzugten Weiterbildung der Erfindung ist die Überwachungseinheit dazu ausgebildet, anhand einer Auswertung von Sensorsignalen der ersten und/oder der zweiten Sensoreinheit eine missbräuchliche Nutzung des Batteriesystems zu erkennen. Alternativ oder zusätzlich ist die Überwachungseinheit dazu ausgebildet, ein unsachgemäßes Öffnen des Batteriesystems zu erkennen. Alternativ oder zusätzlich ist die Überwachungseinheit dazu ausgebildet, eine Manipulation einer in dem Batteriesystem vorhandenen und zur Steuerung des Batteriesystems ausgebildeten Software- und/oder Hardwarekomponente zu erkennen. Dabei ist die Überwachungseinheit ferner dazu ausgebildet, das Vorliegen des Fehlerzustands des Batteriesystems durch Erkennen der missbräuchlichen Nutzung und/oder des unsachgemäßen Öffnens und/oder der Manipulation festzustellen. Die sechste bevorzugte Weiterbildung kann mit einer oder mehreren der zuvor beschriebenen bevorzugten Weiterbildungen und/oder deren Ausgestaltungen kombiniert werden.

Bei einem Batteriesystem gemäß der sechsten Ausführungsform der Erfindung kann die Steuereinheit dazu ausgebildet sein, anhand der Auswertung der Sensorsignale der zweiten Sensoreinheit ein Vorliegen wenigstens eines unzulässigen Werts wenigstens eines Betriebsparameters des jeweiligen Batteriesystems zu erkennen. Ferner kann die Steuereinheit dazu ausgebildet sein, beim Vorliegen des wenigstens eines unzulässigen Werts die missbräuchliche Nutzung des jeweiligen Batteriesystems zu erkennen. Ein solcher unzulässiger Wert kann beispielsweise ein extrem hoher Stromwert eines Entladestroms des jeweiligen Batteriesystems oder eine unzulässige Polarität einer an dem jeweiligen Batteriesystem anliegenden Spannung oder ein unzulässiger Spannungswert der an dem jeweiligen Batteriesystem anliegenden Spannung sein.

Gemäß einer siebten bevorzugten Weiterbildung der Erfindung umfasst die Überwachungseinheit eine elektrische Verbindung und/oder eine Kommunikationsschnittstelle. Dabei ist die Überwachungseinheit dazu ausgebildet, beim Unterbrechen der elektrischen Verbindung ein Vorliegen des unsachgemäßen Öffnens des Batteriesystems zu erkennen. Alternativ oder zusätzlich ist die Überwachungseinheit dazu ausgebildet, ein Öffnen des Batteriesystems zu erkennen. Dabei ist die Überwachungseinheit ferner dazu ausgebildet, das erkannte Öffnen als unsachgemäßes Öffnen des Batteriesystems zu klassifizieren, wenn vor dem erkannten Öffnen des Batteriesystems Steuerinformationen, die vor einem sachgemäßen Öffnen des Batteriesystems an die Kommunikationsschnittstelle der Überwachungseinheit zu übermitteln sind, ausbleiben. Die siebte bevorzugte Weiterbildung kann mit einer oder mehreren der zuvor beschriebenen bevorzugten Weiterbildungen und/oder deren Ausgestaltungen kombiniert werden.

Gemäß einer achten bevorzugten Weiterbildung der Erfindung ist die Steuereinheit dazu ausgebildet, mit einer dritten Sensoreinheit des Fahrzeugs und/oder mit einer Überwachungsvorrichtung des Fahrzeugs und/oder mit wenigstens einem Steuerelement des Fahrzeugs und/oder mit einer Kommunikationsschnittstelle des Fahrzeugs zu kommunizieren. Dabei ist die dritte Sensoreinheit dazu ausgebildet, wenigstens eine dritte physikalische Größe bezüglich wenigstens eines Zustands des Fahrzeugs, insbesondere bezüglich eines Bewegungs- und/oder Überflutungszustands des Fahrzeugs, zu erfassen. Alternativ oder zusätzlich ist die Überwachungsvorrichtung dazu ausgebildet, das Vorliegen des Fehlerzustands des Fahrzeugs anhand einer Auswertung von Sensorsignalen der dritten Sensoreinheit zu erkennen und Informationen über den Fehlerzustand des Fahrzeugs zu ermitteln. Alternativ oder zusätzlich ist das wenigstens eine Steuerelement dazu ausgebildet, beim Vorliegen des Fehlerzustands des Fahrzeugs wenigstens ein Auslösesignal zum Auslösen wenigstens einer Sicherheitsfunktion des Fahrzeugs zu erzeugen. Alternativ oder zusätzlich ist die Kommunikationsschnittstelle des Fahrzeugs dazu ausgebildet, beim Vorliegen des Fehlerzustands des Fahrzeugs wenigsten ein weiteres Auslösesignal zu senden. Die achte bevorzugte Weiterbildung kann mit einer oder mehreren der zuvor beschriebenen bevorzugten Weiterbildungen und/oder deren Ausgestaltungen kombiniert werden.

Bei einem Batteriesystem gemäß der achten bevorzugten Weiterbildung kann das wenigstens eine Auslösesignal ein Auslösesignal für eine Airbag-Zündung eines Airbags des Fahrzeugs umfassen.

Gemäß einer neunten bevorzugten Weiterbildung der Erfindung ist die Steuereinheit dazu ausgebildet, das Vorliegen des Fehlerzustands des Fahrzeugs anhand einer Auswertung von Sensorsignalen der dritten Sensoreinheit zu erkennen. Alternativ oder zusätzlich ist die Steuereinheit dazu ausgebildet, das Vorliegen des Fehlerzustands des Fahrzeugs anhand einer Auswertung wenigstens einer der Informationen über den Fehlerzustand des Fahrzeugs zu erkennen. Alternativ oder zusätzlich ist die Steuereinheit dazu ausgebildet, das Vorliegen des Fehlerzustands des Fahrzeugs beim Vorliegen des wenigstens einen Auslösesignals zu erkennen. Alternativ oder zusätzlich ist die Steuereinheit dazu ausgebildet, das Vorliegen des Fehlerzustands des Fahrzeugs beim Empfang des wenigstens einen weiteren Auslösesignals zu erkennen. Die neunte bevorzugte Weiterbildung kann mit einer oder mehreren der zuvor beschriebenen bevorzugten Weiterbildungen und/oder deren Ausgestaltungen kombiniert werden.

Vorteilhaft bei einem Batteriesystem gemäß der neunten bevorzugten Weiterbildung ist, dass die Steuereinheit solche für andere Zwecke erzeugten und folglich in dem Fahrzeug schon vorhandenen Signale und Informationen nutzen kann, um den Fehlerzustand des Fahrzeugs zu erkennen und folglich auch um eine zuvor beschriebene Deaktivierung der ersten Batteriezelle einzuleiten.

Bei einem Batteriesystem gemäß der neunten bevorzugten Weiterbildung erfolgt bevorzugt eine Fernauslösung einer zuvor beschriebenen Deaktivierung der ersten Batteriezelle über die Kommunikationsschnittstelle des Fahrzeugs.

Gemäß einer zehnten bevorzugten Weiterbildung der Erfindung umfasst die dritte Sensoreinheit einen Beschleunigungssensor und/oder einen Überflutungssensor.

Bei einem zuvor beschriebenen Batteriesystem kann der Fehlerzustand des Fahrzeugs infolge eines Unfalls des Fahrzeugs und/oder infolge einer auf das Fahrzeug wirkenden Naturkatastrophe, wie zum Beispiel einer Überflutung des Fahrzeugs, auftreten. Dabei umfassen die Informationen über den Fehlerzustand des Fahrzeugs bevorzugt Informationen über den Unfall und/oder Informationen über einen Überflutungszustand des Fahrzeugs.

Ein weiterer Aspekt der Erfindung betrifft ein Verfahren zum Überführen der ersten Batteriezelle eines zuvor beschriebenen Batteriesystems in einen sicheren Zustand. Dabei umfasst das Verfahren einen Schritt eines Erkennens eines Vorliegens eines Fehlerzustands der ersten Batteriezelle und/oder des Batteriesystems und/oder des Fahrzeugs. Ferner umfasst das Verfahren einen Schritt eines elektrischen Zuschaltens der Schnellentladeeinheit der ersten Batteriezelle zwischen die zwei Batteriezellterminals der ersten Batteriezelle.

Bei einem zuvor beschriebenen Batteriesystem kann wenigstens eine weitere oder jede weitere der Batteriezellen der Batterie in gleicher Weise ausgebildet sein, in der die erste Batteriezelle ausgebildet ist. In einem solchen Fall weist die Steuereinheit bezüglich einer jeden der wenigstens einen weiteren Batteriezelle und der ersten Batteriezelle oder bezüglich jeder weiteren Batteriezelle der Batterie und der ersten Batteriezelle die gleiche Funktionalität auf. Ferner ist jede der wenigstens einen weiteren Batteriezelle oder jede weitere Batteriezelle der Batterie in gleicher Weise steuerbar, in der die erste Batteriezelle steuerbar ist.

Bei einem zuvor beschriebenen Batteriesystem, bei dem jede weitere Batteriezelle der Batterie und die erste Batteriezelle in gleicher Weise ausgebildet sind, kann das jeweilige Batteriesystem nach einer zuvor beschriebenen Deaktivierung jeder Batteriezelle der Batterie keine Gefährdungen mehr verursachen. In einem solchen Fall kann das jeweilige Batteriesystem insbesondere nach seinem allpoligen Abschalten keine Gefährdung mehr verursachen.

Ein zuvor beschriebenes Batteriesystem kann auch in einem stationären Energiespeicher, einem Werkzeug oder in einem anderen Bewegungsmittel, wie zum Beispiel einem Zweirad oder einem Flugzeug, eingesetzt werden. Vorteilhaft dabei wäre, dass die Steuereinheit solche für andere Zwecke erzeugten und folglich in dem Werkzeug oder in dem Bewegungsmittel schon vorhandenen Signale und Informationen nutzen kann, um eine zuvor beschriebene Deaktivierung der ersten Batteriezelle oder jeder in gleicher Weise wie die erste Batteriezelle ausgebildeten Batteriezelle der Batterie einzuleiten.

### Kurze Beschreibung der Zeichnungen

Nachfolgend werden Ausführungsbeispiele der Erfindung unter Bezugnahme auf die begleitenden Zeichnungen im Detail beschrieben. Für gleiche Komponenten und Parameter werden jeweils gleiche Bezugszeichen verwendet. Jede Komponente und jeder Parameter werden jeweils einmalig eingeführt und bei Wiederholung jeweils als schon bekannt behandelt, unabhängig davon, auf welche Zeichnung oder auf welches Ausführungsbeispiel sich ein jeweils entsprechender Beschreibungsteil, in dem die entsprechende Komponente oder der entsprechende Parameter wiederholt vorkommt, bezieht. In den Zeichnungen ist:

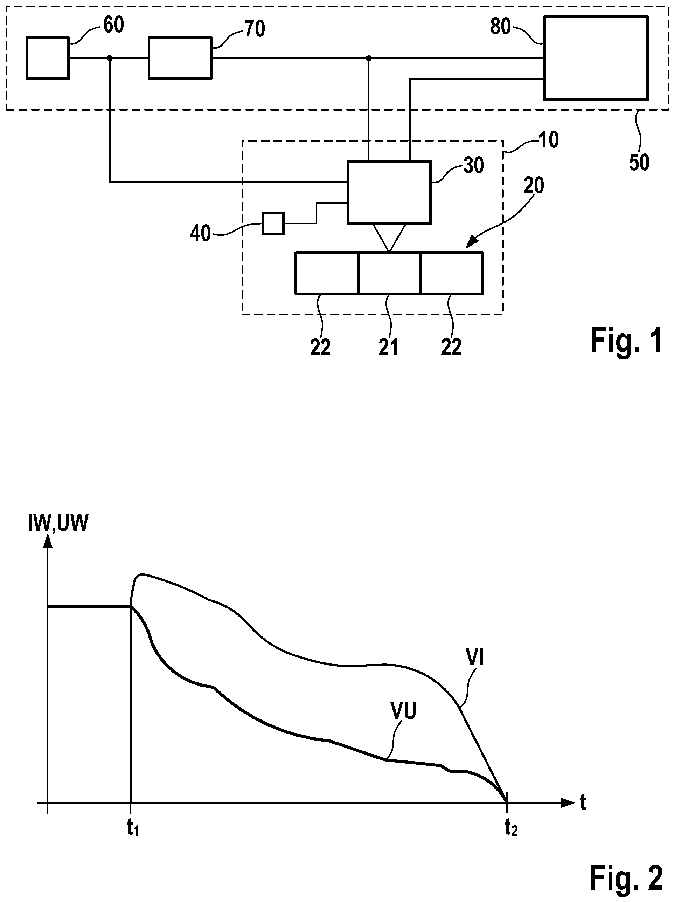

- Figur 1: eine Anordnung mit einem stark schematisiert dargestellten und gemäß einer ersten Ausführungsform der Erfindung ausgebildeten Batteriesystem für ein Fahrzeug und einem stark schematisiert dargestellten Teil einer Elektronik des Fahrzeugs, wobei das Batteriesystem eine erste Batteriezelle mit einer zwischen zwei von innerhalb und/oder außerhalb der ersten Batteriezelle kontaktierbare Batteriezellterminals zuschaltbare Schnellentladeeinheit aufweist, und
- Figur 2: ein zeitabhängiger Verlauf eines durch die erste Batteriezelle und die Schnellentladeeinheit fließenden ersten Stroms und ein zeitabhängiger Verlauf einer Spannung, die zwischen den zwei Batteriezellterminals der ersten Batteriezelle anliegt, wenn die erste Batteriezelle und die Schnellentladeeinheit von dem ersten Strom durchflossen werden.

### Ausführungsform der Erfindung

Figur 1 zeigt eine Anordnung mit einem stark schematisiert dargestellten und gemäß einer ersten Ausführungsform der Erfindung ausgebildeten Batteriesystem 10 für ein Fahrzeug. Das Batteriesystem 10 umfasst eine Batterie 20 mit mehreren in einer Reihenschaltung angeordneten Batteriezellen 21, 22. Die Batteriezellen 21, 22 umfassen eine erste Batteriezelle 21 und mehrere weitere Batteriezellen 22.

Die erste Batteriezelle 21 umfasst einen beispielsweise in Form wenigstens einer Jelly-Roll ausgebildeten elektrochemischen Teil (nicht separat dargestellt) mit mehreren Elektroden und wenigstens einem Separator.

Die Elektroden der ersten Batteriezelle 21 können in Form einer flächigen Anordnung mit mehreren Lagen von Trägermaterialien und chemischen Substanzen ausgebildet sein. Die Elektroden können ferner in Form von beschichteten Metallfolien ausgebildet sein und sind untereinander durch den wenigstens einen Separator getrennt.

Um die wenigstens eine Jelly-Roll jeweils auszubilden, werden beispielsweise zwei der Elektroden und eines des wenigstens einen Separators übereinander angeordnet und anschließend durch Aufwickeln in Form eines runden oder flachen Wickels gebracht. Die wenigstens eine Jelly-Roll kann in einem beispielsweise aus Metall ausgebildeten Gehäuse der ersten Batteriezelle 21 angeordnet sein. In einem solchen Fall kann die erste Batteriezelle 21 prismenförmig ausgebildet sein.

Der wenigstens eine Separator kann jeweils in Form einer elektrisch isolierenden und für in dem elektrochemischen Teil der ersten Batteriezelle 21 erzeugbare Ionen durchlässigen Folienstruktur ausgebildet sein. Dabei wird der wenigstens eine Separator beim Erreichen einer ersten Temperatur für die genannten Ionen zumindest teilweise undurchlässig.

Die erste Batteriezelle 21 umfasst ferner eine Schnellentladeeinheit (nicht separat dargestellt), welche beispielsweise wenigstens einen spezifischen elektrischen Widerstand aufweist. Die Schnellentladeeinheit ist mittels einer Steuereinheit 30 des Batteriesystems 10 zwischen zwei von innerhalb und/oder außerhalb der ersten Batteriezelle 21 kontaktierbare Batteriezellterminals (nicht separat dargestellt) der ersten Batteriezelle 21 elektrisch zuschaltbar. Die Schnellentladeeinheit ist dazu ausgebildet, die erste Batteriezelle 21 mittels eines ersten Stroms zu entladen. Dabei ist ein erster Widerstandswert der Schnellentladeeinheit derartig ausgewählt, dass der erste Strom während eines Durchfließens der Schnellentladeeinheit und der ersten Batteriezelle 21 eine derartige Erwärmung des elektrochemischen Teils der ersten Batteriezelle 21 verursacht, dass der wenigstens eine Separator die erste Temperatur erreicht. Bei geeigneter Wahl des ersten Widerstandswerts wird ein Stromwert des ersten Stroms so groß, dass der erste Strom zu einer starken Erwärmung des gesamten elektrochemischen Teils der ersten Batteriezelle 21 führt. Diese starke Erwärmung führt dazu, dass der wenigstes eine Separator seine erste Temperatur erreicht und dadurch für die genannten Ionen zumindest teilweise undurchlässig wird. Das bedeutet, dass der wenigstens eine Separator beim Erreichen der ersten Temperatur nur noch einen kleinen Teil dieser Ionen oder gar keine Ionen mehr durchlassen kann. Folglich kann innerhalb des elektrochemischen Teils der ersten Batteriezelle 21 kein Ladungstransport mehr oder nur noch ein sehr geringer Ladungsträgertransport stattfinden. Unter Ladungsträgern werden hier die genannten Ionen verstanden.

In einem Fall, in dem der wenigstens eine Separator für die genannten Ionen teilweise undurchlässig wird, erfolgt eine teilweise elektrische Deaktivierung der ersten Batteriezelle 21. In einem solchen Fall erfolgt ferner eine starke Begrenzung eines maximalen Stromwerts des ersten Stroms, so dass die erste Batteriezelle 21 keine Gefährdung mehr oder nur noch eine sehr geringe Gefährdung verursachen kann.

In einem Fall, in dem der wenigstens eine Separator für die genannten Ionen vollständig undurchlässig wird, erfolgt eine vollständige elektrische Deaktivierung der ersten Batteriezelle 21. Nach einer vollständigen Deaktivierung der ersten Batteriezelle 21 weisen der erste Strom einen Stromwert von beinahe
0 A und eine zwischen den zwei Batteriezellterminals der ersten Batteriezelle 21 anliegende Spannung einen Spannungswert von beinahe 0 V auf. In einem solchen Fall kann die erste Batteriezelle 21 keine Gefährdungen mehr verursachen.

Ferner ist der erste Widerstandswert derartig ausgewählt, dass die von dem ersten Strom während des Durchfließens der ersten Batteriezelle 21 und der Schnellentladeeinheit erzeugte Erwärmung des elektrochemischen Teils kein thermisches Durchgehen der ersten Batteriezelle 21 auslöst.
Dabei ist die Steuereinheit 30 dazu ausgebildet, mit einer in oder an der ersten Batteriezelle 21 angeordneten ersten Sensoreinheit (nicht separat dargestellt) und mit einer in oder an dem Batteriesystem 10 angeordneten zweiten Sensoreinheit 40 direkt zu kommunizieren. Dazu ist die Steuereinheit 30 mit der ersten und der zweiten Sensoreinheit 40 jeweils direkt oder über wenigstens eine Kommunikationsschnittstelle verbunden.

Die erste Sensoreinheit umfasst wenigstens einen ersten Sensor und ist dazu ausgebildet, wenigstens eine erste physikalische Größe bezüglich wenigstens eines Zustands der ersten Batteriezelle 21 zu erfassen. Der wenigstens eine erste Sensor umfasst beispielsweise einen Spannungssensor und/oder einen Stromsensor und/oder einen Beschleunigungssensor. Die Steuereinheit 30 ist dazu ausgebildet, ein Vorliegen eines Fehlerzustands der ersten Batteriezelle 21 anhand einer Auswertung von Sensorsignalen der ersten Sensoreinheit zu erkennen.

Die zweite Sensoreinheit 40 umfasst wenigstens einen zweiten Sensor (nicht separat dargestellt) und ist dazu ausgebildet, wenigstens eine zweite physikalische Größe bezüglich wenigstens eines Zustands des Batteriesystems 10 zu erfassen. Der wenigstens eine zweite Sensor umfasst beispielsweise einen Spannungssensor und/oder einen Stromsensor und/oder einen Beschleunigungssensor. Die Steuereinheit 30 ist dazu ausgebildet, ein Vorliegen eines Fehlerzustands des Batteriesystems 10 anhand einer Auswertung von Sensorsignalen der zweiten Sensoreinheit 40 zu erkennen.

Die in der Figur 1 dargestellte Anordnung umfasst ferner einen Teil 50 einer Elektronik des Fahrzeugs, wobei dieser in der Figur 1 dargestellte Teil eine dritte Sensoreinheit 60, eine Überwachungsvorrichtung 70 und ein Steuerelement 80 umfasst. Dabei ist die Überwachungsvorrichtung 70 dazu ausgebildet, sowohl mit der dritten Sensoreinheit 60 als auch mit dem Steuerelement 80 zu kommunizieren. Dazu ist die Überwachungsvorrichtung 70 mit der dritten Sensoreinheit 60 und dem Steuerelement 80 jeweils direkt oder über wenigstens eine Kommunikationsschnittstelle verbunden.

Ferner ist die Steuereinheit 30 dazu ausgebildet, mit der dritten Sensoreinheit 60, der Überwachungsvorrichtung 70 und dem Steuerelement 80 zu kommunizieren. Dazu ist die Steuereinheit 30 mit der dritten Sensoreinheit 60, der Überwachungsvorrichtung 70 und dem Steuerelement 80 jeweils direkt oder über wenigstens eine Kommunikationsschnittstelle verbunden.
Die dritte Sensoreinheit 60 umfasst wenigstens einen dritten Sensor (nicht separat dargestellt) und ist dazu ausgebildet, wenigstens eine dritte physikalische Größe bezüglich wenigstens eines Zustands des Fahrzeugs zu erfassen. Der wenigstens eine dritte Sensor umfasst beispielsweise einen Beschleunigungssensor und/oder einen Überflutungssensor. Die Steuereinheit 30 ist dazu ausgebildet, ein Vorliegen eines Fehlerzustands des Fahrzeugs anhand einer Auswertung von Sensorsignalen der dritten Sensoreinheit 60 zu erkennen. Dabei kann der Fehlerzustand des Fahrzeugs durch einen Unfall oder eine Überflutung des Fahrzeugs hervorgerufen sein.

Die Überwachungsvorrichtung 70 ist dazu ausgebildet, das Vorliegen des Fehlerzustands des Fahrzeugs anhand einer Auswertung von Sensorsignalen der dritten Sensoreinheit 60 zu erkennen und Informationen über den Fehlerzustand des Fahrzeugs zu ermitteln. Diese Informationen können Informationen über einen Unfall des Fahrzeugs und/oder über einen Überflutungszustand des Fahrzeugs umfassen. Die Steuereinheit 30 ist dazu ausgebildet, das Vorliegen des Fehlerzustands des Fahrzeugs anhand einer Auswertung wenigstens einer der Informationen über den Fehlerzustand des Fahrzeugs zu erkennen.

Das Steuerelement 80 ist dazu ausgebildet, beim Vorliegen des Fehlerzustands des Fahrzeugs wenigstens ein Auslösesignal zum Auslösen einer Sicherheitsfunktion des Fahrzeugs, beispielsweise der
Airbag-Zündung eines Airbags des Fahrzeugs, zu erzeugen. Die Steuereinheit 30 ist dazu ausgebildet, das Vorliegen des Fehlerzustands des Fahrzeugs beim Vorliegen des wenigstens einen Auslösesignals zu erkennen.

Weiterhin ist die Steuereinheit 30 dazu ausgebildet, beim Vorliegen des Fehlerzustands der ersten Batteriezelle 21, des Batteriesystems 10 und des Fahrzeugs jeweils die Schnellentladeeinheit zwischen die zwei Batteriezellterminals der ersten Batteriezelle 21 zuzuschalten und dadurch eine zuvor beschriebene Deaktivierung der ersten Batteriezelle 21 einzuleiten.

Bei dem zuvor beschriebenen Batteriesystem kann eine jede der weiteren Batteriezellen 22 in gleicher Weise ausgebildet sein, in der die erste Batteriezelle 21 ausgebildet ist. Hierbei weist die Steuereinheit 30 bezüglich der ersten Batteriezelle 21 und jeder weiteren Batteriezelle 22 die gleiche Funktionalität auf. Weiterhin kann ein zuvor beschriebenes Batteriesystem mehrere Steuereinheiten 30 aufweisen.

Figur 2 zeigt einen Verlauf VI eines durch die Schnellentladeeinheit fließenden ersten Stroms in Abhängigkeit von der Zeit t.

In der Figur 2 sind einen ersten Zeitpunkt t1 und einen zweiten Zeitpunkt t2 eingetragen. Dabei erfolgt zu dem ersten Zeitpunkt t1 ein durch die Steuereinheit 30 vorgenommenes Zuschalten der Schnellentladeeinheit zwischen die zwei Batteriezellterminals der ersten Batteriezelle 21. Zu dem zweiten Zeitpunkt t2 wird eine weiter oben beschriebene vollständige Deaktivierung der ersten Batteriezelle 21 erreicht.

Figur 2 zeigt ferner einen zwischen dem ersten und dem zweiten Zeitpunkt t1, t2 vorkommenden beispielhaften Verlauf VU einer zwischen den zwei Batteriezellterminals der ersten Batteriezelle 21 anliegenden Spannung in Abhängigkeit von der Zeit t. Eine in der Figur 2 mit IW, UW gekennzeichnete Achse gibt Stromwerte und Spannungswerte an.

Zu dem zweiten Zeitpunkt t2 weisen der erste Strom einen Stromwert von beinahe 0 A und die zwischen den zwei Batteriezellterminals der ersten Batteriezelle 21 anliegende Spannung einen Spannungswert von beinahe 0 V auf.

Neben der voranstehenden schriftlichen Offenbarung wird hiermit zur weiteren Offenbarung der Erfindung ergänzend auf die Darstellung in den Figuren 1 und 2 Bezug genommen.

## Patentansprüche

1. Batteriesystem (10) für ein Fahrzeug und / oder einen stationären Energiespeicher mit einer mehrere Batteriezellen (21, 22) aufweisenden Batterie (20) und einer Steuereinheit (30), wobei eine erste der Batteriezellen (21, 22) einen elektrochemischen Teil mit mehreren Elektroden und wenigstens einem Separator umfasst, wobei der wenigstens eine Separator beim Erreichen einer ersten Temperatur für in dem elektrochemischen Teil erzeugbare Ionen zumindest teilweise undurchlässig wird, **dadurch gekennzeichnet, dass** die erste Batteriezelle (21) eine Schnellentladeeinheit umfasst, wobei die Schnellentladeeinheit mittels der Steuereinheit (30) zwischen zwei von innerhalb und/oder außerhalb der ersten Batteriezelle (21) kontaktierbare Batteriezellterminals der ersten Batteriezelle (21) elektrisch zuschaltbar ist und dazu ausgebildet ist, die erste Batteriezelle (21) mittels eines ersten Stroms zu entladen, wobei ein erster Widerstandswert der Schnellentladeeinheit derartig ausgewählt ist, dass der erste Strom während eines Durchfließens der Schnellentladeeinheit und der ersten Batteriezelle (21) eine derartige Erwärmung des elektrochemischen Teils verursacht, dass der wenigstens eine Separator die erste Temperatur erreicht.

2. Batteriesystem (10) nach Anspruch 1, **dadurch gekennzeichnet, dass** der erste Widerstandswert weiter derartig ausgewählt ist, dass die von dem ersten Strom während des Durchfließens der ersten Batteriezelle (21) und der Schnellentladeeinheit erzeugte Erwärmung des elektrochemischen Teils kein thermisches Durchgehen der ersten Batteriezelle (21) auslöst.

3. Batteriesystem (10) nach einem der Ansprüche 1 oder 2, **dadurch gekennzeichnet, dass** die Steuereinheit (30) dazu ausgebildet ist, bei einem Vorliegen eines Fehlerzustands der ersten Batteriezelle (21) und/oder des Batteriesystems (10) und/oder des Fahrzeugs die Schnellentladeeinheit zwischen die zwei Batteriezellterminals zuzuschalten.

4. Batteriesystem (10) nach Anspruch 3, **dadurch gekennzeichnet, dass** die Steuereinheit (30) dazu ausgebildet ist, mit einer ersten und/oder zweiten Sensoreinheit (40) des Batteriesystems (10) und/oder mit einer Überwachungseinheit des Batteriesystems (10) und/oder mit wenigstens einem Steuergerät des Batteriesystems (10) zu kommunizieren, wobei die erste Sensoreinheit dazu ausgebildet ist, wenigstens eine erste physikalische Größe bezüglich wenigstens eines Zustands der ersten Batteriezelle (21), insbesondere bezüglich eines Betriebs- und/oder Bewegungszustands der ersten Batteriezelle (21), zu erfassen und/oder wobei die zweite Sensoreinheit (40) dazu ausgebildet ist, wenigstens eine zweite physikalische Größe bezüglich wenigstens eines Zustands des Batteriesystems (10), insbesondere bezüglich eines Betriebs- und/oder Bewegungszustands des Batteriesystems (10), zu erfassen, und/oder wobei die Überwachungseinheit dazu ausgebildet ist, das Vorliegen des Fehlerzustands des Batteriesystems (10) zu erkennen und beim Vorliegen des Fehlerzustands des Batteriesystems (10) wenigstens ein Warnsignal oder Warninformationen zu erzeugen und/oder wobei das wenigstens eine Steuergerät dazu ausgebildet ist, zum Steuern wenigstens einer Komponente des Batteriesystems (10) jeweils Steuerinformationen und/oder Steuersignale zu erzeugen, insbesondere anhand einer Auswertung von Sensorsignalen der ersten und/oder der zweiten Sensoreinheit (40).

5. Batteriesystem (10) nach Anspruch 4, **dadurch gekennzeichnet, dass** die Steuereinheit (30) dazu ausgebildet ist, das Vorliegen des Fehlerzustands der ersten Batteriezelle (21) anhand einer Auswertung von Sensorsignalen der ersten Sensoreinheit zu erkennen und/oder das Vorliegen des Fehlerzustands des Batteriesystems (10) anhand einer Auswertung von Sensorsignalen der zweiten Sensoreinheit (40) und/oder beim Vorliegen des wenigstens einen Warnsignals und/oder anhand einer Auswertung der Warninformationen und/oder anhand einer Auswertung wenigstens eines der Steuersignale und/oder wenigstens einer der Steuerinformationen zu erkennen.

6. Batteriesystem (10) nach einem der Ansprüche 4 oder 5, **dadurch gekennzeichnet, dass** die erste und/oder die zweite Sensoreinheit (40) jeweils einen Spannungssensor und/oder einen Stromsensor und/oder einen Beschleunigungssensor umfassen.

7. Batteriesystem (10) nach einem der Ansprüche 4 bis 6, **dadurch gekennzeichnet, dass** die Überwachungseinheit dazu ausgebildet ist, anhand einer Auswertung von Sensorsignalen der ersten und/oder der zweiten Sensoreinheit eine missbräuchliche Nutzung des Batteriesystems (10) zu erkennen und/oder ein unsachgemäßes Öffnen des Batteriesystems (10) und/oder eine Manipulation einer in dem Batteriesystem vorhandenen Software- und/oder Hardwarekomponente zu erkennen und das Vorliegen des Fehlerzustands des Batteriesystems (10) durch Erkennen der missbräuchlichen Nutzung und/oder des unsachgemäßen Öffnens und/oder der Manipulation festzustellen.

8. Batteriesystem (10) nach Anspruch 7, **dadurch gekennzeichnet, dass** die Überwachungseinheit eine elektrische Verbindung und/oder eine Kommunikationsschnittstelle umfasst, wobei die Überwachungseinheit dazu ausgebildet ist, beim Unterbrechen der elektrischen Verbindung ein Vorliegen des unsachgemäßen Öffnens des Batteriesystems (10) zu erkennen und/oder wobei die Überwachungseinheit dazu ausgebildet ist, ein Öffnen des Batteriesystems (10) zu erkennen und als unsachgemäßes Öffnen des Batteriesystems (10) zu klassifizieren, wenn vor dem erkannten Öffnen des Batteriesystems (10) Steuerinformationen, die vor einem sachgemäßen Öffnen des Batteriesystems (10) an die Kommunikationsschnittstelle der Überwachungseinheit zu übermitteln sind, ausbleiben.

9. Batteriesystem (10) nach einem der Ansprüche 3 bis 8, **dadurch gekennzeichnet, dass** die Steuereinheit (30) dazu ausgebildet ist, mit einer dritten Sensoreinheit (60) des Fahrzeugs und oder mit einer Überwachungsvorrichtung (70) des Fahrzeugs und/oder mit wenigstens einem Steuerelement (80) des Fahrzeugs und/oder mit einer Kommunikationsschnittstelle des Fahrzeugs zu kommunizieren, wobei die dritte Sensoreinheit (60) dazu ausgebildet ist, wenigstens eine dritte physikalische Größe bezüglich wenigstens eines Zustands des Fahrzeugs, insbesondere bezüglich eines Bewegungs- und/oder Überflutungszustands des Fahrzeugs, zu erfassen, und/oder wobei die Überwachungsvorrichtung (70) dazu ausgebildet ist, das Vorliegen des Fehlerzustands des Fahrzeugs anhand einer Auswertung von Sensorsignalen der dritten Sensoreinheit (60) zu erkennen und Informationen über den Fehlerzustand des Fahrzeugs zu ermitteln, und/oder wobei das wenigstens eine Steuerelement (80) dazu ausgebildet ist, beim Vorliegen des Fehlerzustands des Fahrzeugs wenigstens ein Auslösesignal zum Auslösen wenigstens einer Sicherheitsfunktion des Fahrzeugs zu erzeugen, und/oder wobei die Kommunikationsschnittstelle des Fahrzeugs dazu ausgebildet ist, beim Vorliegen des Fehlerzustands des Fahrzeugs wenigstens ein weiteres Auslösesignal zu senden.

10. Batteriesystem (10) nach Anspruch 9, **dadurch gekennzeichnet, dass** die Steuereinheit (30) dazu ausgebildet ist, das Vorliegen des Fehlerzustands des Fahrzeugs anhand einer Auswertung von Sensorsignalen der dritten Sensoreinheit (60) und/oder anhand einer Auswertung wenigstens einer der Informationen über den Fehlerzustand des Fahrzeugs und/oder beim Vorliegen des wenigstens einen Auslösesignals und/oder beim Empfang des wenigstens einen weiteren Auslösesignals zu erkennen.

11. Batteriesystem (10) nach einem der Ansprüche 9 oder 10, **dadurch gekennzeichnet, dass** die dritte Sensoreinheit (60) einen Beschleunigungssensor und/oder einen Überflutungssensor umfasst.

12. Verfahren zum Überführen einer ersten von mehreren Batteriezellen (21, 22) einer Batterie (20) eines Batteriesystems (10) für ein Fahrzeug in einen sicheren Zustand, **dadurch gekennzeichnet, dass** das Batteriesystem (10) gemäß einem der vorangehenden Ansprüche ausgebildet ist, wobei das Verfahren folgende Schritte umfasst:
Erkennen eines Vorliegens eines Fehlerzustands der ersten Batteriezelle (21) und/oder des Batteriesystems (10) und/oder des Fahrzeugs, und
elektrisches Zuschalten der Schnellentladeeinheit der ersten Batteriezelle (21) zwischen die zwei Batteriezellterminals der ersten Batteriezelle (21).

## Claims

1. Battery system (10) for a vehicle and/or a stationary energy store comprising a battery (20), which has a plurality of battery cells (21, 22), and a control unit (30), wherein a first of the battery cells (21, 22) comprises an electrochemical part comprising a plurality of electrodes and at least one separator, wherein, upon reaching a first temperature, the at least one separator becomes at least partly impermeable to ions that can be generated in the electrochemical part, **characterized in that** the first battery cell (21) comprises a rapid-discharge unit, wherein the rapid-discharge unit can be electrically connected, by means of the control unit (30), between two battery cell terminals of the first battery cell (21), which battery cell terminals can be contact-connected from inside and/or outside of the first battery cell (21), and is designed to discharge the first battery cell (21) by means of a first current, wherein a first resistance value of the rapid-discharge unit is selected in such a way that the first current causes the electrochemical part to heat up when it flows through the rapid-discharge unit and the first battery cell (21) in such a way that the at least one separator reaches the first temperature.

2. Battery system (10) according to Claim 1, **characterized in that** the first resistance value is further selected in such a way that the heating of the electrochemical part generated by the first current when it flows through the first battery cell (21) and the rapid-discharge unit does not trigger thermal runaway in the first battery cell (21).

3. Battery system (10) according to either of Claims 1 and 2, **characterized in that** the control unit (30) is designed to connect the rapid-discharge unit between the two battery cell terminals in the presence of a fault state of the first battery cell (21) and/or the battery system (10) and/or the vehicle.

4. Battery system (10) according to Claim 3, **characterized in that** the control unit (30) is designed to communicate with a first and/or second sensor unit (40) of the battery system (10) and/or with a monitoring unit of the battery system (10) and/or with at least one control device of the battery system (10), wherein the first sensor unit is designed to detect at least one first physical variable with respect to at least one state of the first battery cell (21), in particular with respect to an operating and/or movement state of the first battery cell (21), and/or wherein the second sensor unit (40) is designed to detect at least one second physical variable with respect to at least one state of the battery system (10), in particular with respect to an operating and/or movement state of the battery system (10), and/or wherein the monitoring unit is designed to identify the presence of the fault state of the battery system (10) and to generate at least one warning signal or pieces of warning information in the presence of the fault state of the battery system (10) and/or wherein the at least one control device is designed to generate in each case pieces of control information and/or control signals for the purpose of controlling at least one component of the battery system (10), in particular on the basis of an evaluation of sensor signals of the first and/or the second sensor unit (40).

5. Battery system (10) according to Claim 4, **characterized in that** the control unit (30) is designed to identify the presence of the fault state of the first battery cell (21) on the basis of an evaluation of sensor signals of the first sensor unit and/or to identify the presence of the fault state of the battery system (10) on the basis of an evaluation of sensor signals of the second sensor unit (40) and/or in the presence of the at least one warning signal and/or on the basis of an evaluation of the pieces of warning information and/or on the basis of an evaluation of at least one of the control signals and/or at least one of the pieces of control information.

6. Battery system (10) according to either of Claims 4 and 5, **characterized in that** the first and/or the second sensor unit (40) each comprise a voltage sensor and/or a current sensor and/or an acceleration sensor.

7. Battery system (10) according to one of Claims 4 to 6, **characterized in that** the monitoring unit is designed to identify an improper use of the battery system (10) and/or an inappropriate opening of the battery system (10) and/or a manipulation of a software and/or hardware component present in the battery system on the basis of an evaluation of sensor signals of the first and/or the second sensor unit and to determine the presence of the fault state of the battery system (10) by identifying the improper use and/or the inappropriate opening and/or the manipulation.

8. Battery system (10) according to Claim 7, **characterized in that** the monitoring unit comprises an electrical connection and/or a communication interface, wherein the monitoring unit is designed to identify a presence of the inappropriate opening of the battery system (10) when the electrical connection is interrupted and/or wherein the monitoring unit is designed to identify an opening of the battery system (10) and to classify it as inappropriate opening of the battery system (10) when, before the identified opening of the battery system (10), pieces of control information, which are to be transmitted to the communication interface of the monitoring unit before an appropriate opening of the battery system (10), are absent.

9. Battery system (10) according to one of Claims 3 to 8, **characterized in that** the control unit (30) is designed to communicate with a third sensor unit (60) of the vehicle and/or with a monitoring apparatus (70) of the vehicle and/or with at least one control element (80) of the vehicle and/or with a communication interface of the vehicle, wherein the third sensor unit (60) is designed to detect at least one third physical variable with respect to at least one state of the vehicle, in particular with respect to a movement and/or flooding state of the vehicle, and/or wherein the monitoring apparatus (70) is designed to identify the presence of the fault state of the vehicle on the basis of an evaluation of sensor signals of the third sensor unit (60) and to ascertain pieces of information about the fault state of the vehicle, and/or wherein the at least one control element (80) is designed to generate at least one trigger signal for the purpose of triggering at least one safety function of the vehicle in the presence of the fault state of the vehicle, and/or wherein the communication interface of the vehicle is designed to emit at least one further trigger signal in the presence of the fault state of the vehicle.

10. Battery system (10) according to Claim 9, **characterized in that** the control unit (30) is designed to identify the presence of the fault state of the vehicle on the basis of an evaluation of sensor signals of the third sensor unit (60) and/or on the basis of an evaluation of at least one of the pieces of information about the fault state of the vehicle and/or in the presence of the at least one trigger signal and/or upon reception of the at least one further trigger signal.

11. Battery system (10) according to either of Claims 9 and 10, **characterized in that** the third sensor unit (60) comprises an acceleration sensor and/or a flooding sensor.

12. Method for transferring a first of a plurality of battery cells (21, 22) of a battery (20) of a battery system (10) for a vehicle to a safe state, **characterized in that** the battery system (10) is designed according to one of the preceding claims, wherein the method comprises the following steps:
identifying a presence of a fault state of the first battery cell (21) and/or the battery system (10) and/or the vehicle, and
electrically connecting the rapid-discharge unit of the first battery cell (21) between the two battery cell terminals of the first battery cell (21).

## Revendications

1. Système de batterie (10) pour un véhicule et/ou un accumulateur d'énergie fixe comprenant une batterie (20), qui possède plusieurs cellules de batterie (21, 22), et une unité de commande (30), une première des cellules de batterie (21, 22) comportant une partie électrochimique ayant plusieurs électrodes et au moins un séparateur, l'au moins un séparateur étant, en atteignant une première température, au moins partiellement imperméable pour les ions qui peuvent être générés dans la partie électrochimique, **caractérisé en ce que** la première cellule de batterie (21) comprend une unité de décharge rapide, l'unité de décharge rapide pouvant être mise en circuit électriquement au moyen de l'unité de commande (30) entre deux bornes de cellule de batterie de la première cellule de batterie (21) avec lesquelles le contact peut être établi depuis l'intérieur et/ou l'extérieur de la première cellule de batterie (21) et étant configurée pour décharger la première cellule de batterie (21) au moyen d'un premier courant, une première valeur de résistance de l'unité de décharge rapide étant sélectionnée de telle sorte que le premier courant, pendant une circulation à travers l'unité de décharge rapide et la première cellule de batterie (21), provoque un échauffement de la partie électrochimique tel que l'au moins un séparateur atteint la première température.

2. Système de batterie (10) selon la revendication 1, **caractérisé en ce que** la première valeur de résistance est en outre sélectionnée de telle sorte que l'échauffement de la partie électrochimique produit par le premier courant pendant la circulation à travers la première cellule de batterie (21) et l'unité de décharge rapide ne déclenche pas d'emballement thermique de la première cellule de batterie (21).

3. Système de batterie (10) selon l'une des revendications 1 ou 2, **caractérisé en ce que** l'unité de commande (30) est configurée pour mettre l'unité de décharge rapide en circuit entre les deux bornes de cellule de batterie en présence d'une situation de défaut de la première cellule de batterie (21) et/ou du système de batterie (10) et/ou du véhicule.

4. Système de batterie (10) selon la revendication 3, **caractérisé en ce que** l'unité de commande (30) est configurée pour communiquer avec une première et/ou une deuxième unité de détection (40) du système de batterie (10) et/ou avec une unité de surveillance du système de batterie (10) et/ou avec au moins un contrôleur du système de batterie (10), la première unité de détection étant configurée pour détecter au moins une première grandeur physique concernant au moins un état de la première cellule de batterie (21), notamment concernant un état de fonctionnement et/ou de mouvement de la première cellule de batterie (21), et/ou la deuxième unité de détection (40) étant configurée pour détecter au moins une deuxième grandeur physique concernant au moins un état du système de batterie (10), notamment concernant un état de fonctionnement et/ou de mouvement du système de batterie (10), et/ou l'unité de surveillance étant configurée pour reconnaître la présence de la situation de défaut du système de batterie (10) et, en présence de la situation de défaut du système de batterie (10), générer au moins un signal d'alerte ou une information d'alerte et/ou l'au moins un contrôleur étant configuré pour générer respectivement des informations de commande et/ou des signaux de commande en vue de commander au moins un composant du système de batterie (10), notamment à l'aide d'une interprétation des signaux de capteur de la première et/ou de la deuxième unité de détection (40).

5. Système de batterie (10) selon la revendication 4, **caractérisé en ce que** l'unité de commande (30) est configurée pour reconnaître la présence de la situation de défaut de la première cellule de batterie (21) à l'aide d'une interprétation de signaux de capteur de la première unité de détection et/ou reconnaître la présence de la situation de défaut du système de batterie (10) à l'aide d'une interprétation de signaux de capteur de la deuxième unité de détection (40) et/ou en présence de l'au moins un signal d'alerte et/ou à l'aide d'une interprétation des informations d'alerte et/ou à l'aide d'une interprétation d'au moins l'un des signaux de commande et/ou d'au moins l'une des informations de commande.

6. Système de batterie (10) selon l'une des revendications 4 ou 5, **caractérisé en ce que** la première et/ou la deuxième unité de détection (40) comportent respectivement un capteur de tension et/ou un capteur de courant et/ou un capteur d'accélération.

7. Système de batterie (10) selon l'une des revendications 4 à 6, **caractérisé en ce que** l'unité de surveillance est configurée pour reconnaître, à l'aide d'une interprétation de signaux de capteur de la première et/ou de la deuxième unité de détection, une utilisation abusive du système de batterie (10) et/ou reconnaître une ouverture incorrecte du système de batterie (10) et/ou une manipulation d'un composant logiciel et/ou matériel qui se trouve dans le système de batterie et constater la présence d'une situation de défaut du système de batterie (10) en reconnaissant l'utilisation abusive et/ou l'ouverture incorrecte et/ou la manipulation.

8. Système de batterie (10) selon la revendication 7, **caractérisé en ce que** l'unité de surveillance comporte une liaison électrique et/ou une interface de communication, l'unité de surveillance étant configurée pour, en cas d'interruption de la liaison électrique, reconnaître une présence de la ouverture incorrecte du système de batterie (10) et/ou l'unité de surveillance étant configurée pour reconnaître une ouverture du système de batterie (10) et la classifier en tant qu'ouverture incorrecte du système de batterie (10) si, avant l'ouverture reconnue du système de batterie (10), les informations de commande qui doivent être communiquées à l'interface de communication de l'unité de surveillance avant une ouverture conforme du système de batterie (10) sont absentes.

9. Système de batterie (10) selon l'une des revendications 3 à 8, **caractérisé en ce que** l'unité de commande (30) est configurée pour communiquer avec une troisième unité de détection (60) du véhicule et/ou avec un dispositif de surveillance (70) du véhicule et/ou avec au moins un élément de commande (80) du véhicule et/ou avec une interface de communication du véhicule, la troisième unité de détection (60) étant configurée pour détecter au moins une troisième grandeur physique concernant au moins un état du véhicule, notamment concernant un état de mouvement et/ou de submersion du véhicule, et/ou le dispositif de surveillance (70) étant configuré pour reconnaître la présence de la situation de défaut du véhicule à l'aide d'une interprétation de signaux de capteur de la troisième unité de détection (60) et déterminer des informations à propos de la situation de défaut du véhicule, et/ou l'au moins un élément de commande (80) étant configuré pour, en présence de la situation de défaut du véhicule, générer au moins un signal de déclenchement servant à déclencher au moins une fonction de sécurité du véhicule, et/ou l'interface de communication du véhicule étant configurée pour, en présence de la situation de défaut du véhicule, envoyer au moins un signal de déclenchement supplémentaire.

10. Système de batterie (10) selon la revendication 9, **caractérisé en ce que** l'unité de commande (30) est configurée pour reconnaître la présence de la situation de défaut du véhicule à l'aide d'une interprétation des signaux de capteur de la troisième unité de détection (60) et/ou à l'aide d'une interprétation d'au moins l'une des informations à propos de la situation de défaut du véhicule et/ou en présence de l'au moins un signal de déclenchement et/ou en cas de réception de l'au moins un signal de déclenchement supplémentaire.

11. Système de batterie (10) selon l'une des revendications 9 ou 10, **caractérisé en ce que** la troisième unité de détection (60) comporte un capteur d'accélération et/ou un capteur d'immersion.

12. Procédé pour amener une première de plusieurs cellules de batterie (21, 22) d'une batterie (20) d'un système de batterie (10) pour un véhicule dans un état sécurisé, **caractérisé en ce que** le système de batterie (10) est configuré selon l'une des revendications précédentes, le procédé comprenant les étapes suivantes :
reconnaissance d'une présence d'une situation de défaut de la première cellule de batterie (21) et/ou du système de batterie (10) et/ou du véhicule,
et
mise en circuit électrique de l'unité de décharge rapide de la première cellule de batterie (21) entre les deux bornes de cellule de batterie de la première cellule de batterie (21).
